(19) Europäisches Patentamt European Patent Office Office européen des brevets

(11) **EP 2 078 573 A1**

(12) **EUROPEAN PATENT APPLICATION**
published in accordance with Art. 153(4) EPC

(43) Date of publication:
**15.07.2009 Bulletin 2009/29**

(51) Int Cl.:
***B23B 31/20*** *(2006.01)*

(21) Application number: **07807260.0**

(22) Date of filing: **13.09.2007**

(86) International application number:
**PCT/JP2007/067853**

(87) International publication number:
**WO 2008/053638 (08.05.2008 Gazette 2008/19)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **31.10.2006 PCT/JP2006/321756**

(71) Applicant: **Daishowa Seiki Co., Ltd.**
**Osaka 5798013 (JP)**

(72) Inventor: **KITAMURA, Yasuhiko**
**Osaka 5798013 (JP)**

(74) Representative: **Brown, Kenneth Richard et al**
**R.G.C. Jenkins & Co.**
**26 Caxton Street**
**London SW1H 0RJ (GB)**

(54) **MEMBER FOR COLLET CHUCK, COLLET, TIGHTENING NUT, AND COLLET CHUCK**

(57)     It is an object of the invention to provide a constituent member of a collet chuck, a collet and a fastening nut as well as a collet chuck capable of reinforcing a holding force of a tool. As means therefor, in a collet chuck 10 including a chuck body 20 having a taper hole 22 in an inwardly converging shape, a diameter contractable collet 40 having a first taper face 44 fitted to the taper hole 22, and a fastening nut 60 screwed to the chuck body 20, it is **characterized** to include a force increasing collet 80 with a first contact face 82 and a second contact face 86 respectively brought into contact with a second taper face 46 formed at an outer peripheral face of a front end portion of the collet 40 and inclined to reduce an outer diameter as proceeding to a front end thereof, and a third taper face 70 formed at an inner peripheral face of a front end portion of the fastening nut 60 and inclined to reduce an inner diameter as proceeding to a front end thereof, wherein in a state of fastening the fastening nut 60 to the chuck body 20, a front side of the first contact face 82 of the force increasing collet 80 is not brought into contact with an outer peripheral face of the collet 40 in a state of pressing the collet 40 frontwardly.

*Fig.2*

**Description**

Technical Field

The present invention relates to a collet chuck for attaching a tool of a drill, an end mill or the like to a machine tool spindle.

Background Art

In a background art, there is known a collet chuck for holding a tool of a drill, an end mill or the like to attach to a machine tool spindle, and in such a collet chuck, various proposals have been made to enable to carry out highly accurate machining by firmly holding the tool.

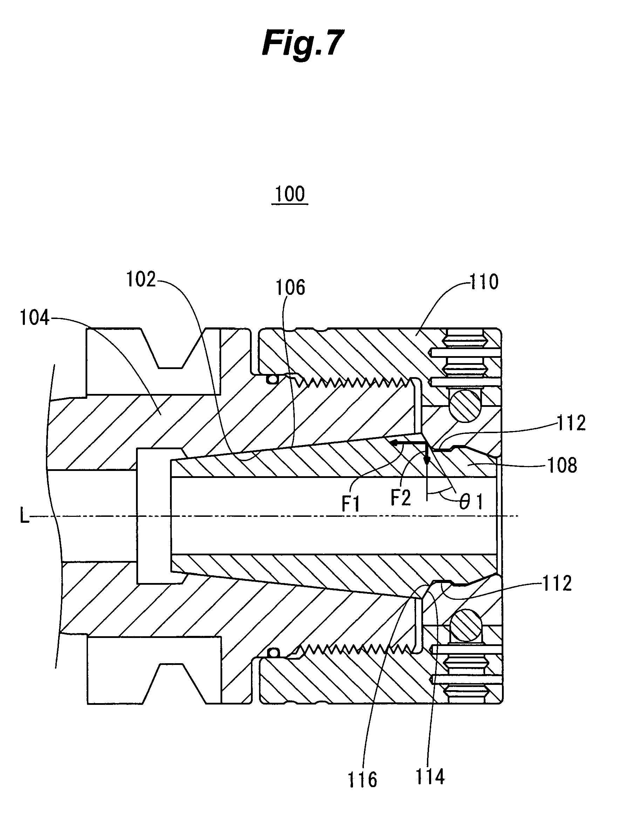

For example, a collet chuck 100 shown in Fig. 7 comprises a chuck body 104 having an inwardly converging taper hole 102 at a front end portion thereof, a diameter contractable collet 108 having a first taper face 106 to be fitted to the taper hole 102, and a fastening nut 110 removably connected to the collet 108 and screwed to the chuck body 104.

A circular groove 112 is formed at an outer peripheral face of a front end portion of the collet 108, a second taper face 114 inclined inverse to the first taper face 106 is formed at a peripheral side wall of the circular groove 112 contiguous to the first taper face 106, further, an inner peripheral face of the fastening nut 110 is formed with a taper face 116 (refer to, for example, Patent Reference 1).

Although in such a collet chuck 100, a diameter of the collet 108 is effectively contracted by operating a press force F2 inwardly in a diameter direction in addition to operating a press force F1 in an axial direction L from the fastening nut 110 to the collet 108 by bringing the taper face 116 of the fastening nut 110 into press contact with the second taper face 114 of the collet 108 by fastening the fastening nut 110, it is desired to further reinforce a tool holding force in accordance with further severe formation of a cutting condition.

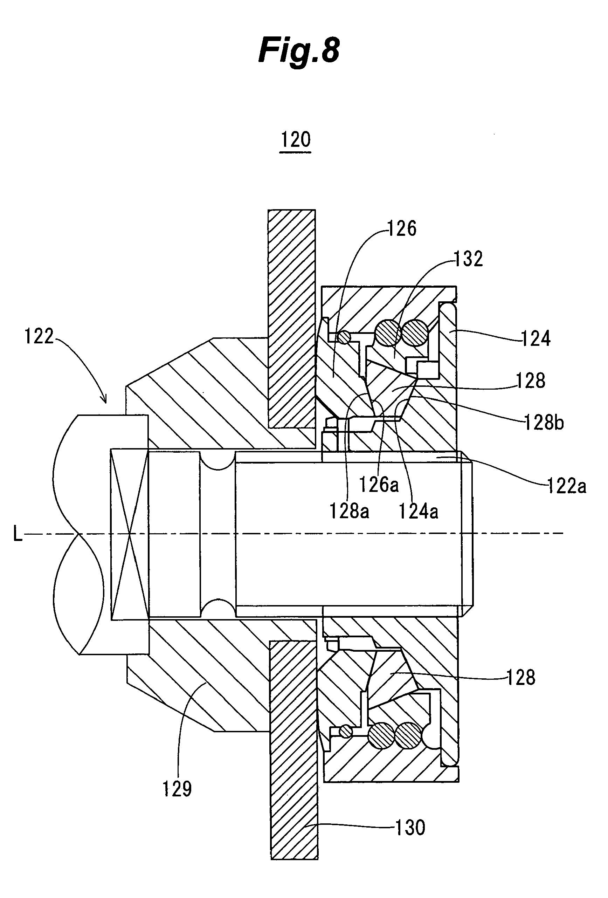

Meanwhile, as shown in Fig. 8, as for a fastening piece 120 for pressing to fasten a fastened object 130 of a tool or the like to a flange portion 129 of a fastened member 122 in an axial direction L by way of a fastening flange 126 by fastening a fastening nut 124 screwed with a male screw 122a at a shaft end of the fastened member 122, there is known to fasten strongly pressing the fastened object 130 in an axial direction L by a wedge action (refer to, for example, Patent Reference 2).

The fastening piece 120 includes a collet 128 elongatably and contractably supported in a diameter direction by guide faces 124a and 126a of the fastening nut 124 and the fastening flange 126 having a section in a V-like shape opposed to each other, and by moving the fastening flange 126 to a side of the fastened object 130 by compressing an outer diameter of the collet 128 by a force from a taper ring 132 moved to the axial direction L , the collet 128 is made to function as a wedge to thereby enhancedly fasten the fastened object 130 in the axial direction L.

When such a collet 128 is applied to a front end portion of the collet 106 of the collet chuck 100 described in Patent Reference 1, since the collet 128 functions as the wedge for widening an interval of the guide faces having a section in the V-like shape, and therefore, there poses a problem that the tool holding force cannot efficiently be reinforced.

That is, the collet 128 exerted with the force in the axial direction L presses the collet 108 holding the tool from side faces 128a and 128b thereof. Then, the collet 108 is operated with a force for pressing rearwardly in the axial direction from the side face 128a and also operated with a force of pressing forwardly in the axial direction from the side face 128b, the forces in the two directions are cancelled by each other and a large press force is not exerted rearwardly in the axial direction and it is difficult to efficiently reinforce the tool holding force.

Patent Reference 1: JP-A-2001-219310
Patent Reference 2: JP-A-10-309612

Disclosure of the Invention

Problems that the Invention is to Solve

The invention has been carried out in view of the above-described problem and it is an object thereof to provide a constituent member of a collet chuck, a collet and a fastening nut as well as a collet chuck capable of reinforcing a force of holding a tool.

Means for Solving the Problems

The invention according to Claim 1 is a constituent member of a collet chuck including a chuck body with a taper hole in an inwardly converging shape, a diameter contractable collet with a first taper face fitted to the taper hole, and a fastening nut screwed to the chuck body, the constituent member comprising: a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, wherein in a state of fastening the fastening nut to the chuck body, a front side of the first contact face is not brought into contact with an outer peripheral face of the collet in a state of pressing the collet forwardly.

The invention according to Claim 2 is a collet of a collet chuck including a chuck body with a taper hole in an inwardly converging shape, a diameter contractable collet with a first taper face fitted to the taper hole, and a fastening nut screwed to the chuck body, the collet comprising: a force increasing collet with a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, wherein in a state of fastening the fastening nut to the chuck body, a front side of the first contact face of the force increasing collet is not brought into contact with an outer peripheral face of the collet in a state of pressing the collet frontwardly.

The invention according to Claim 3 is a fastening nut of a collet chuck including a chuck body with a taper hole in an inwardly converging shape, a diameter contractable collet with a first taper face fitted to the taper hole, and a fastening nut screwed to the chuck body, the fastening nut comprising: a force increasing collet having a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, wherein in a state of fastening the fastening nut to the chuck body, a front side of the first contact face of the force increasing collet is not brought into contact with an outer peripheral face of the collet in a state of pressing the collet frontwardly.

The invention according to Claim 4 is a collet chuck including a chuck body with a taper hole in an inwardly converging shape, a diameter contractable collet with a first taper face fitted to the taper hole, and a fastening nut screwed to the chuck body, the collet comprising: a force increasing collet having a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, wherein in a state of fastening the fastening nut to the chuck body, a front side of the first contact face of the force increasing collet is not brought into contact with an outer peripheral face of the collet in a state of pressing the collet frontwardly.

According to the invention according to Claims 1 through 4 described above, the constituent member (force increasing collet) of a collet chuck including the first contact face brought into contact with the second taper face in the frontwardly converging shape formed at the outer peripheral face of the front end portion of the collet, and the second contact face brought into contact with the third taper face in the frontwardly converging shape formed at the inner peripheral face of the front end portion of the fastening nut is arranged at the collet chuck, and therefore, a press force in an axial direction generated by fastening the fastening nut 60 can be amplified.

Further, in the state of fastening the fastening nut to the chuck body, the front side of the first contact face of the constituent member (force increasing collet) is not brought into contact with the outer peripheral face of the collet in the state of pressing the collet forwardly, and therefore, the amplified force can be exerted to the collet without being reduced by being cancelled by each other in the axial direction and the tool holding force can efficiently be reinforced.

The invention according to Claim 5 is a constituent member of a collet chuck including a chuck body with a taper hole in an inwardly converging shape, a diameter contractable collet with a first taper face fitted to the taper hole, and a fastening nut screwed to the chuck body, the constituent member comprising: a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, wherein the constituent member further includes a third contact face brought into contact with a fourth taper face formed on a front side of the second taper face of the collet and inclined to increase an outer diameter as proceeding to a front end thereof in a state of fastening the fastening nut to the chuck body, wherein an angle of the third contact face relative to a diameter direction of the collet chuck is larger than an angle of the first contact face relative to the diameter direction of the collet chuck.

The invention according to Claim 6 is a collet of a collet chuck including a chuck body with a taper hole in an inwardly converging shape, a diameter contractable collet with a first taper face fitted to the taper hole, and a fastening nut screwed to the chuck body, the collet comprising: a force increasing collet having a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, wherein the force increasing collet further includes a third contact face brought into contact with a fourth taper face formed on a front side of the second taper face of the collet and inclined to increase an outer diameter as proceeding to a front end thereof in a state of fastening the fastening nut to the chuck body, and wherein an angle of the third contact face relative to a diameter direction of the collet chuck is larger than an angle of the first contact face relative to the diameter direction of the collet chuck.

The invention according to Claim 7 is a fastening nut of a collet chuck including a chuck body with a taper hole in an inwardly converging shape, a diameter contractable collet with a first taper face fitted to the taper hole, and a fastening nut screwed to the chuck body, the fastening nut comprising: a force increasing collet with a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, wherein the force increasing collet further includes a third contact face brought into contact with a fourth taper face formed on a front side of the second taper face of the collet and inclined to increase an outer diameter as proceeding to a front end thereof in a state of fastening the fastening nut to the chuck body, and wherein an angle of the third contact face relative to a diameter direction of the collet chuck is larger than an angle of the first contact face relative to the diameter direction of the collet chuck.

The invention according to Claim 8 is a collet chuck including a chuck body having a taper hole in an inwardly converging shape, a diameter contractable collet having a first taper face fitted to the taper hole, and a fastening nut screwed to the chuck body, the collet chuck comprising a force increasing collet having a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, wherein the force increasing collet further includes a third contact face brought into contact with a fourth taper face formed on a front side of the second taper face of the collet and inclined to increase an outer diameter as proceeding to a front end thereof in a state of fastening the fastening nut to the chuck body, and wherein an angle of the third contact face relative to a diameter direction of the collet chuck is larger than an angle of the first contact face relative to the diameter direction of the collet chuck.

In the invention according to Claims 5 through 8 described above, the collet chuck is provided with the constituent member (force increasing collet) of the collet chuck including the first contact face brought into contact with the second taper face of the frontwardly converging shape formed at the outer peripheral face of the front end portion of the collet, and the second contact face brought into contact with the third taper face in the frontwardly converging shape formed at the inner peripheral face of the front end portion of the fastening nut, and therefore, the press force in the axial direction generated by fastening the fastening nut can be amplified.

Further, although the above-described constituent member (force increasing collet) includes the third contact face brought into contact with the fourth taper face in the inwardly converging shape formed on the front side of the second taper shape of the collet in the state of fastening the fastening nut to the chuck body, and the collet is pressed to the front side of the third contact face, since the angle of the third contact face relative to the diameter direction of the collet chuck is set to be larger than the angle of the first contact face relative to the diameter direction of the collet chuck, while restraining a press force to a rear side in the axial direction exerted to the second taper face from being reduced by setting a component of a force to the front side in the axial direction to be small, by setting a component force inwardly in the diameter direction of the collet chuck to be large, the press force in a direction of holding the tool can be exerted efficiently to the front end portion of the collet, and the tool holding force can be reinforced.

Further, in the invention according to Claims 1 through 8 mentioned above, the angle of the second contact face relative to the diameter direction of the collet chuck may be provided to be larger than the angle of the first contact face relative to the diameter direction of the collet chuck, thereby, the holding force of the tool can further effectively be reinforced.

Advantage of the Invention

According to the invention, the force increasing collet for amplifying the press force from the fastening nut is arranged between the collet and the fastening nut, and therefore, the tool holding force of the collet chuck can further be reinforced.

Best Mode for Carrying of the Invention

(first embodiment)

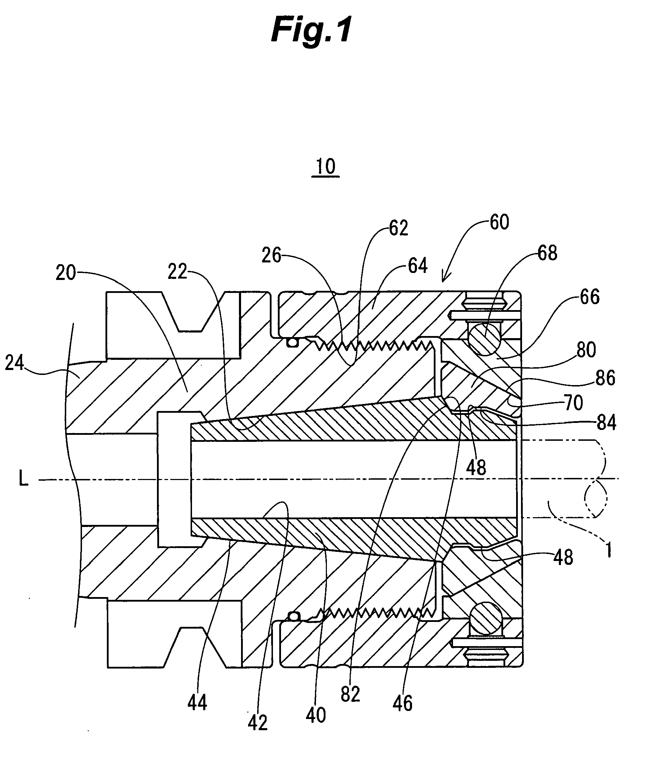

A first embodiment of the invention will be explained in reference to Fig. 1 through Fig. 4 as follows.

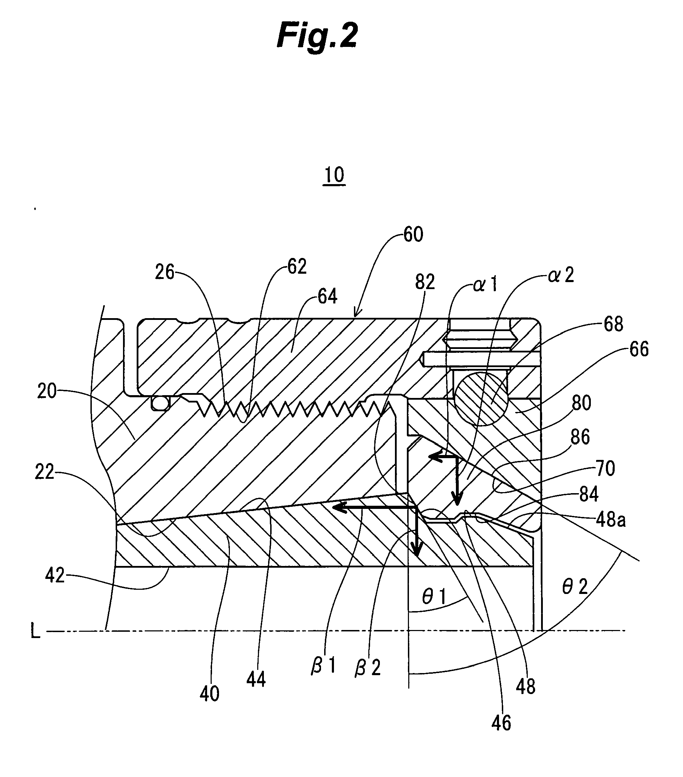

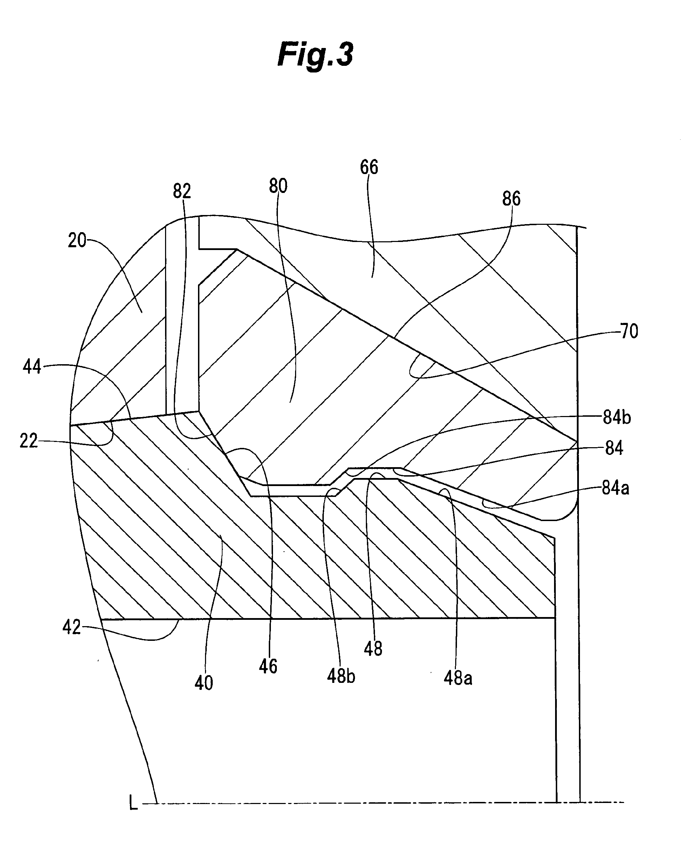

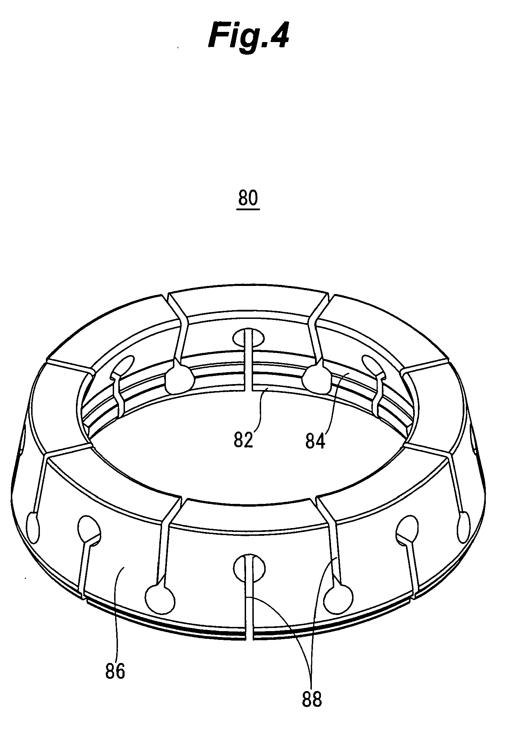

Fig. 1 is a sectional view of a collet chuck 10 according to the embodiment, Fig. 2 and Fig. 3 are sectional views enlarging an essential portion of the collet chuck 10, and Fig. 4 is a perspective view of a force increasing collet 80.

As shown by Fig. 1 and Fig. 2, the collet chuck 10 according to the embodiment includes a chuck body 20 having a taper hole 22 at a front end portion thereof, a collet 40 fitted to the taper hole 22, a fastening nut 60 mounted to the chuck body 20, and the force increasing collet 80 arranged between the collet 40 and the fastening nut 60.

The chuck body 20 includes the taper hole 22 in an inwardly converging shape converging to a rear end side thereof at a front end side thereof inserted with a tool 1, and formed with a shunk portion 24 attachably and detachably mounted to a main spindle (not illustrated) of a machine tool on a rear end side thereof. Further, an outer peripheral face of the front end portion of the chuck body 20 is formed with a male screw portion 26 to be screwed with a female screw portion 62 of the fastening nut 60.

The collet 40 constitutes substantially a shape of a cylinder having a tool inserting hole 42 to be inserted with the tool 1, and a diameter thereof is made to be able to be contracted by split grooves, not illustrated, cut to be formed alternately from a front end side and a rear end side. An outer peripheral face of a rear end portion of the collet 40 is formed with a first taper face 44 fitted to the taper hole 22 of the chuck body 20. Further, at an outer peripheral face of the front end portion, a second taper face 46 inclined such that the more proceeding to the front end, the more reduced the outer diameter of the collet 40 is formed contiguous to the first taper face 44, and a front end side of the second taper face 46 is formed with a circular projected portion 48. According to the circular projected portion 48, as shown by Fig. 3, a front end side peripheral side wall 48a thereof constitutes a frontwardly converging taper shape reducing an outer diameter thereof as proceeding to a front end thereof, and a rear end side peripheral side wall 48b constitutes a rearwardly converging taper shape of reducing an outer diameter as proceeding to a rear end thereof.

The fastening nut 60 includes a nut body 64 formed with the female screw portion 62 to be screwed with the male screw portion 26 of the chuck body 20 at an inner peripheral face of a rear end portion thereof, and a ring 66 rotatably mounted to an inner peripheral face of a front end portion of the nut body 64, circular grooves having a section in a semicircular shape are formed at respectively corresponding positions of the inner peripheral face of the nut body 64 and the outer peripheral face of the ring 66, and by closely integrating a ball 68 between the two circular grooves, the nut body 64 and the ring 66 are connected pivotally with each other and integrally in an axial direction L. An inner peripheral face of a front end portion of the fastening nut 60, that is, the inner peripheral face of the ring 66 is formed with a third taper face 70 inclined such that the more proceeding to the front end, the more reduced the inner diameter.

The third taper face 70 is provided such that an angle $\theta 2$ relative to a diameter direction of the collet chuck 10 (incidentally, $0°<\theta 2<90°$) is larger than an angle $\theta 1$ of the second taper face 46 relative to the diameter direction of the collet chuck 10 (incidentally, $0°<\theta 1<90°$), and according to the embodiment, for example, the angle $\theta 1$ is provided in a range of 30° through 40°, and the angle $\theta 2$ is provided in a range of 60° through 80°.

As shown by Fig. 4, the force increasing collet 80 is a member in a circular shape an outer shape of which constitutes a shape of a cone a front end of which is cut off, and a diameter thereof is made to be able to be contracted by split grooves 88 cut to be formed alternately from a front end side and a rear end side thereof. The force increasing collet 80 is removably connected to the collet 40 and is arranged between the collet 40 and the fastening nut 60 at the front end portion of the collet chuck 10.

In details, as shown by Fig. 2 and Fig. 3, an inner peripheral face of the force increasing collet 80 is formed with a first contact face 82 in which an angle thereof relative to the diameter direction of the collet chuck 10 is equal to that of the second taper face 46 on a rear end side and which can be brought into face contact with the second taper face 46, and formed with a circular recessed portion 84 with which the circular projected portion 48 of the collet 40 is engaged to be spaced apart therefrom by a clearance on a front end side of the first contact face 82.

The circular recessed portion 84 constitutes a frontwardly converging taper shape at a front end side peripheral side wall 84a and constitutes a rearwardly converging taper shape at a rear end side peripheral side wall 84b in correspondence with the circular projected portion 48 of the collet 40.

On the other hand, an outer peripheral face of the force increasing collet 80 is formed with a second contact face 86 in which an angle relative to the diameter direction of the collet chuck 10 is equal to that of the third taper face 70 of the ring 66 and which can be brought into face contact with the third taper face 70.

According to the collet chuck 10 of the embodiment, by fastening the fastening nut 60 to the chuck body 20, the third taper face 70 is brought into press contact with the second contact face 86 of the force increasing collet 80, and the force increasing collet 80 receiving a press force from the fastening nut 60 is brought into press contact with the second taper face 46 of the collet 40 at the first contact face 82.

There is provided a rigidity capable of maintaining the clearance formed between the circular recessed portion 84 provided on a front side of the first contact face 82 and the circular projected portion 48 provided at the collet 40 even in a state of elastically deforming the force increasing collet 80 by an operation of the split grooves 88 by fastening the fastening nut 60 in this way.

That is, the rear end side peripheral side wall 48b constituting the rearwardly converging taper shape of the circular projected portion 48 and the force increasing collet 80 are not brought into contact with each other, and a front side of the first contact face 82 of the force increasing collet 80 is not brought into contact with the outer peripheral face of the collet 40 in a state of pressing the collet 40 frontwardly.

Further, the circular recessed portion 84 of the force increasing collet 80 constitutes the frontwardly converging taper shape at the front end side peripheral side wall 84a and constitutes the rearwardly converging taper shape at the rear end side peripheral side wall 84b in correspondence with the circular projected portion 48 of the collet 40, and therefore, attachment and detachment of the force increasing collet 80 to and from the collet 40 are facilitated.

In order to fix the tool 1 to the collet chuck 10 of the embodiment, first, the force increasing collet 80 is fitted to the fastening nut 60 by bringing the second contact face 86 of the force increasing collet 80 into contact with the third taper face 70 of the fastening nut 60. Successively, the front end portion of the collet 40 is fitted to the force increasing collet 80 attached to the fastening nut 60, and the tool 1 is inserted into the tool inserting hole 42 of the collet 40. Successively, the first taper face 44 of the collet 40 is fitted to the taper hole 24 of the chuck body 20, the female screw portion 62 of the fastening nut 60 is screwed to the male screw portion 26 of the chuck body 20 from the state, and the tool 1 is fixed to the collet chuck 10 by pivoting the nut body 64 of the fastening nut 60 in a fastening direction.

By the fastening, the third taper face 70 formed at the ring 66 of the fastening nut 60 is brought into press contact with the second contact face 86 of the force increasing collet 80, as shown in Fig. 2, the force increasing collet 80 is operated with a press force $\alpha1$ in the axial direction L from the fastening nut 60 and is operated with a press force $\alpha2$ inwardly in the diameter direction. Here, a relationship of equation (1) described below is established among the angle $\theta2$ of the second contact face 86 relative to the diameter direction of the collet chuck 10 and the press forces $\alpha1$ and $\alpha2$.

$$\alpha2 = \alpha1 \times \tan\theta2 \quad (1)$$

Further, the first contact face 82 of the force increasing collet 80 receiving the press force from the fastening nut 60 is brought into press contact with the second taper face 46 of the collet 40, and the collet 40 is operated with a press force $\beta1$ in the axial direction L and operated with a press force $\beta2$ inwardly in the diameter direction from the force increasing collet 80. Here, a relationship of equation (2) described below is established among the angle $\theta1$ of the first contact face 82 relative to the diameter direction of the collet chuck 10 and the press forces $\beta1$ and $\beta2$. Further, the press force $\beta2$ inwardly in the diameter direction operated to the collet 40 is equal to the press force $\alpha2$ inwardly in the diameter direction operated to the force increasing collet 80, and therefore, equation (2) described below becomes equation (3) described below.

$$\beta1 = \beta2 / \tan\theta1 \quad (2)$$

$$\beta1 = \alpha1 \times \tan\theta2 / \tan\theta1 \quad (3)$$

According to the collet chuck 10 of the embodiment, in the state of fastening the fastening nut 60, the front side of the first contact face 82 of the force increasing collet 80 is not brought into contact with the outer peripheral face of the collet 40, the force increasing collet 80 does not press the collet 40 to the front side, and therefore, a synthesized force F in the axial direction L operated to the collet 40 becomes equation (4) described below.

$$F = \alpha1 + \alpha1 \times \tan\theta2 / \tan\theta1 \quad (4)$$

As described above, according to the collet chuck 10 of the embodiment, the press force F larger than the press force $\alpha1$ in the axial direction L generated by fastening the fastening nut 60 is operated to the collet 40 without being reduced by being cancelled by each other in the axial direction, and the force of holding the tool 1 can be reinforced.

Particularly, as in the embodiment, tanθ2/tanθ1>1 by providing the angle θ2 of the second contact face 86 relative to the diameter direction of the collet chuck 10 larger than the angle θ1 of the first contact face 82, and the press force F in the axial direction L can further effectively be reinforced.

Further, although according to the embodiment, the second taper face 46 is formed at the outer peripheral face of the front end portion of the collet 40 contiguous to the first taper face 44, the invention is not limited thereto but, for example, there may be constructed a constitution in which the peripheral side wall 48a on the front end side of the circular projected portion 48 is brought into face contact with the first contact face of the force increasing collet 80 as the second taper face.

Example

Although a specific example and effect of the invention will be shown by an example and a comparative example with regard to the above-described first embodiment, the invention according to the embodiment is not limited to the example.

Collet chucks of examples 1 and 2 are the collet chucks 10 each arranged with the force increasing collet 80 between the collet 40 and the fastening nut 60 as shown by Fig. 1 and Fig. 2, and the angles θ1 and θ2 of the first contact face 82 and the second contact face 86 relative to the diameter direction are set as θ1=30°, θ2=60° in example 1 and θ1=40°, θ2=80° in example 2.

As shown by Fig. 7, a collet chuck of comparative example includes the chuck body 104 having the taper hole 102 in the inwardly converging shape at the front end portion, the diameter contractable collet 108 having the first taper face 106 fitted to the taper hole 102, and the fastening nut 110 removably connected to the collet 108 and screwed to the chuck body 104, the outer peripheral face of the front end portion of the collet 108 is formed with the circular groove 112, the peripheral side wall of the circular groove 112 contiguous to the first taper face 106 is formed with the second taper face 114 inclined inverse to the first taper face, the inner peripheral face of the fastening nut 110 is formed with the taper face 116, and the angle θ1 of the second taper face 114 relative to the diameter direction of the collet chuck 100 is set to 30°.

A holding force test of the tool is carried out for the collet chucks of examples 1 and 2 and comparative example. In the holding force test, a tool holding force generated when the fastening nut is fastened by respective nut fastening torques for respective 1.0Kgf/m from 3.0 to 6.0Kgf/m is measured and an average value of a result of 4 times measurement is shown in Table 1.

[Table 1]

|  | Angle θ1 | Nut fastening torque (Kgf/m) | | | |
|---|---|---|---|---|---|
|  | Angle θ2 | 3.0 | 4.0 | 5.0 | 6.0 |
| Example 1 | θ1=30°<br>θ2=60° | 5.8 | 6.6 | 9.4 | 11.9 |
| Example 2 | θ1=40°<br>θ2=80° | 6.5 | 8.1 | 10.4 | 12.3 |
| Comparative example | θ1=30° | 3.7 | 5.7 | 6.2 | 8.0 |

As is apparent from Table 1, according to the collet chucks of examples 1 and 2, the holding force is 1.2 times through 1.8 times as much as that of the collet chuck of comparative example and the tool holding force can be reinforced.

(second embodiment)

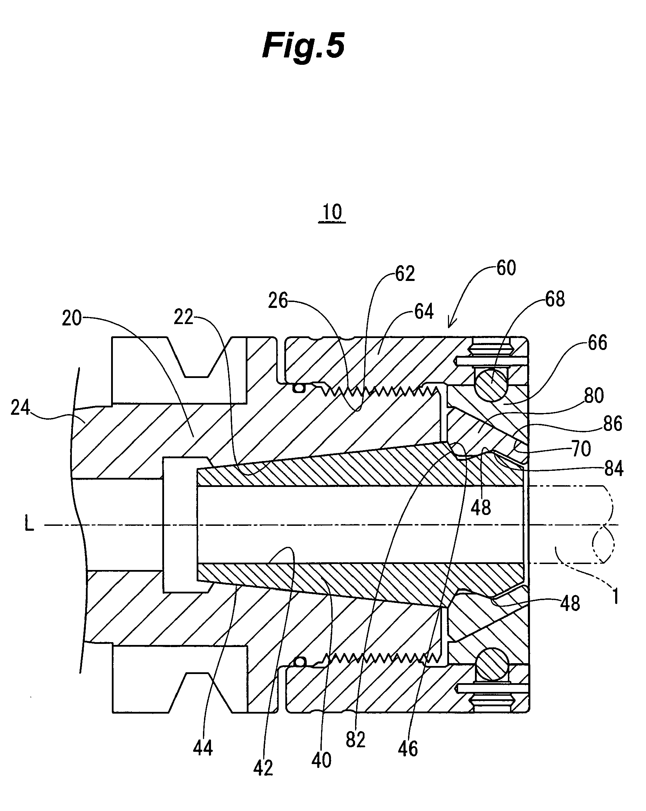

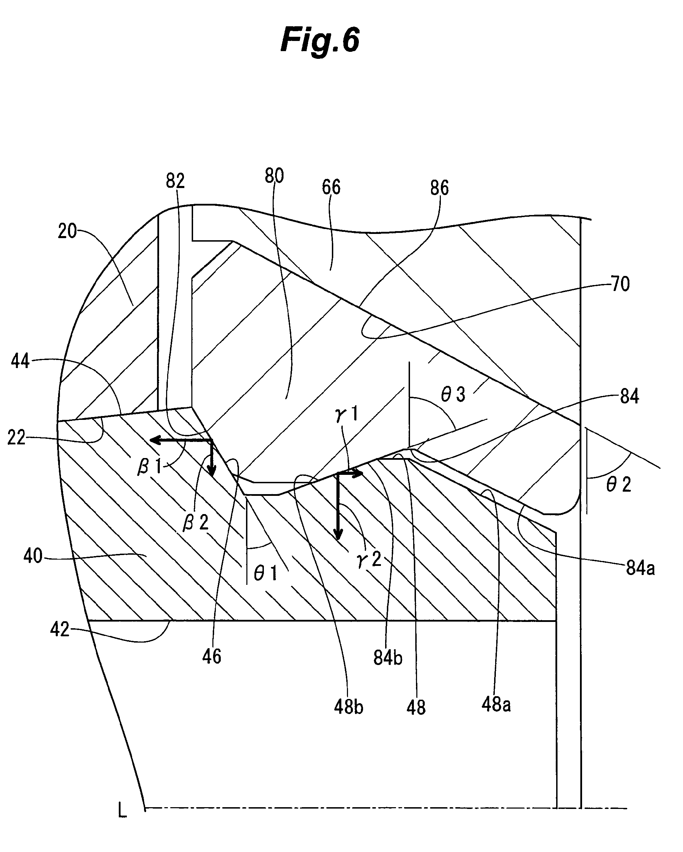

Next, a second embodiment of the invention will be explained in reference to Fig. 5 and Fig. 6. Elements the same as or corresponding to those of the above-described first embodiment are attached with the same notations and a duplicated explanation thereof will be omitted.

A point of difference between the embodiment and the above-described first embodiment resides in that in a state of fastening the fastening nut 60 to the chuck body 20, the front side of the first contact face 82 of the force increasing collet 80 is brought into contact with the collet 40.

In details, as shown by Fig. 5 and Fig. 6, the inner peripheral face of the force increasing collet 80 is formed with the first contact face 82 in which the angle relative to the diameter direction of the collet chuck 10 is equal to that of the second taper face 46 on the rear end side and which can be brought into face contact with the second taper face 46, and formed with the circular recessed portion 84 to be engaged with the circular projected portion 48 of the collet 40 on the front end side of the first contact face 82.

The circular recessed portion 84 is provided such that the front end side peripheral side wall 84a constitutes the frontwardly converging taper shape, the rear end side peripheral side wall 84b constitutes the rearwardly converging taper shape in correspondence with the circular projected portion 48 of the collet 40, and the rear end side peripheral side wall 84b of the circular recessed portion 84 is made to be able to be brought into face contact with the rear end side peripheral side wall 48b of the circular projected portion 48. That is, according to the embodiment, the rear end side peripheral side wall 84b of the circular recessed portion 84 constitutes the third contact face 84b, and the rear end side peripheral side wall 48b of the circular projected portion 48 constitutes the fourth taper face 48b. According to the rear end side peripheral side wall (third contact face) 84b of the circular recessed portion 84, an angle θ3 relative to the diameter direction of the collet chuck 10 (incidentally, 0°<θ3<90°) is provided to be larger than the angle θ1 of the first contact face 82 relative to the diameter direction of the collet chuck 10, and according to the embodiment, for example, the angle θ3 is provided in a range of 60° through 80°.

According to the collet chuck 10 of the embodiment, by fastening the fastening nut 60 to the chuck body 20, the third taper face 70 is brought into press contact with the second contact face 86 of the force increasing collet 80. By contracting the diameter by elastically deforming the force increasing collet 80 receiving the press force from the fastening nut 60, the first contact face 82 is brought into press contact with the second taper face 46 of the collet 40, and the third contact face 84b is brought into press contact with the fourth taper face 48b of the collet 40. Further, before fastening the fastening nut 60, the third contact face 84b may not be brought into contact with the fourth taper face 48b of the collet 40.

Thereby, the collet 40 is operated with the press force β1 frontwardly in the axial direction L and the press force β2 inwardly in the diameter direction from the first contact face 82 of the force increasing collet 80, and is operated with a press force γ1 rearwardly in the axial direction L and a press force γ2 inwardly in the diameter direction from the third contact face 84b of the force increasing collet 80.

Here, a relationship of equation (5) described below is established among the angle θ3 of the third contact face 84b relative to the diameter direction of the collet chuck 10 and the press forces γ1 and γ2.

$$\gamma1=\gamma2/\tan\theta3 \quad (5)$$

Although according to the collet chuck 10 of the embodiment, in the state of fastening the fastening nut 60, the third contact face 84b of the force increasing collet 80 is brought into contact with the fourth taper face 48b of the collet 40, and the force increasing collet 80 presses the collet 40 forwardly, since the angle θ3 of the third contact face 84b relative to the diameter direction of the collet chuck 10 is set to be larger than the angle θ1 of the first contact face 82 relative to the diameter direction of the collet chuck 10, a component of force γ2 inwardly in the diameter direction of the collet chuck 10 can be set to be large while restraining the press force β1 rearwardly in the axial direction L exerted to the second taper face 46 from being reduced by setting a component of force γ1 frontwardly in the axial direction L to be small.

The large force γ2 can be exerted inwardly in the diameter direction of the collet chuck 10 to the fourth taper face 48 provided at the front end portion of the collet 40 in this way, and therefore, the diameter of the collet 40 is easy to be contracted, and the tool holding force can efficiently be reinforced.

Brief Description of the Drawings

[Fig. 1] Fig. 1 is a sectional view of a chuck collet according to a first embodiment of the invention.
[Fig. 2] Fig. 2 is a sectional view enlarging an essential portion of the chuck collet according to the first embodiment of the invention.
[Fig. 3] Fig. 3 is a perspective view showing a force increasing collet.
[Fig. 4] Fig. 4 is a sectional view enlarging an essential portion of the chuck collet according to the first embodiment of the invention.
[Fig. 5] Fig. 5 is a sectional view of a chuck collet according to a second embodiment of the invention.
[Fig. 6] Fig. 6 is a sectional view enlarging an essential portion of the chuck collet according to the second embodiment of the invention.
[Fig. 7] Fig. 7 is a sectional view showing a chuck collet of a background art.
[Fig. 8] Fig. 8 is a sectional view showing a fastening piece of a background art.

Description of Reference Numerals and Signs

| | |
|---|---|
| 10 | collet chuck |
| 20 | chuck body |
| 22 | taper hole |
| 26 | male screw portion |
| 40 | collet |
| 44 | first taper face |
| 46 | second taper face |
| 60 | fastening nut |
| 64 | nut body |
| 66 | ring |
| 70 | third taper face |
| 80 | force increasing collet |
| 82 | first contact face |
| 86 | second contact face |

**Claims**

1. A constituent member of a collet chuck including a chuck body with a taper hole in an inwardly converging shape, a diameter contractable collet having a first taper face fitted to the taper hole, and a fastening nut screwed to the chuck body, the constituent member comprising:

   a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof;
   wherein in a state of fastening the fastening nut to the chuck body, a front side of the first contact face is not brought into contact with an outer peripheral face of the collet in a state of pressing the collet forwardly.

2. A collet of a collet chuck including a chuck body having a taper hole in an inwardly converging shape, a diameter contractable collet with a first taper face fitted to the taper hole, and a fastening nut screwed to the chuck body, the collet comprising:

   a force increasing collet with a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof;
   wherein in a state of fastening the fastening nut to the chuck body, a front side of the first contact face of the force increasing collet is not brought into contact with an outer peripheral face of the collet in a state of pressing the collet frontwardly.

3. A fastening nut of a collet chuck including a chuck body with a taper hole in an inwardly converging shape, a diameter contractable collet with a first taper face fitted to the taper hole, and a fastening nut screwed to the chuck body, the fastening nut comprising:

   a force increasing collet with a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof;
   wherein in a state of fastening the fastening nut to the chuck body, a front side of the first contact face of the force increasing collet is not brought into contact with an outer peripheral face of the collet in a state of pressing the collet frontwardly.

**4.** A collet chuck including a chuck body having a taper hole in an inwardly converging shape, a diameter contractable collet with a first taper face fitted to the taper hole, and a fastening nut screwed to the chuck body, the collet chuck further comprising:

a force increasing collet with a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof;

wherein in a state of fastening the fastening nut to the chuck body, a front side of the first contact face of the force increasing collet is not brought into contact with an outer peripheral face of the collet in a state of pressing the collet frontwardly.

**5.** A constituent member of a collet chuck including a chuck body having a taper hole in an inwardly converging shape, a diameter contractable collet with a first taper face fitted to the taper hole, and a fastening nut screwed to the chuck body, the constituent member comprising:

a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof, and a third contact face brought into contact with a fourth taper face formed on a front side of the second taper face of the collet and inclined to increase an outer diameter as proceeding to a front end thereof in a state of fastening the fastening nut to the chuck body;

an angle of the third contact face relative to a diameter direction of the collet chuck being larger than an angle of the first contact face relative to the diameter direction of the collet chuck.

**6.** A collet of a collet chuck including a chuck body with a taper hole in an inwardly converging shape, a diameter contractable collet with a first taper face fitted to the taper hole, and a fastening nut screwed to the chuck body, the collet comprising:

a force increasing collet with a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof;

and with a third contact face brought into contact with a fourth taper face formed on a front side of the second taper face of the collet and inclined to increase an outer diameter as proceeding to a front end thereof in a state of fastening the fastening nut to the chuck body; and

wherein an angle of the third contact face relative to a diameter direction of the collet chuck is larger than an angle of the first contact face relative to the diameter direction of the collet chuck.

**7.** A fastening nut of a collet chuck including a chuck body with a taper hole in an inwardly converging shape, a diameter contractable collet with a first taper face fitted to the taper hole, and a fastening nut screwed to the chuck body, the fastening nut comprising:

a force increasing collet with a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof;

and with a third contact face brought into contact with a fourth taper face formed on a front side of the second taper face of the collet and inclined to increase an outer diameter as proceeding to a front end thereof in a state of fastening the fastening nut to the chuck body; and

wherein an angle of the third contact face relative to a diameter direction of the collet chuck is larger than an angle of the first contact face relative to the diameter direction of the collet chuck.

**8.** A collet chuck comprising a chuck body with a taper hole in an inwardly converging shape, a diameter contractable collet with a first taper face fitted to the taper hole, and a fastening nut screwed to the chuck body, the collet chuck comprising:

a force increasing collet with a first contact face and a second contact face respectively brought into contact with a second taper face formed at an outer peripheral face of a front end portion of the collet and inclined to reduce an outer diameter as proceeding to a front end thereof, and a third taper face formed at an inner peripheral face of a front end portion of the fastening nut and inclined to reduce an inner diameter as proceeding to a front end thereof;

and with a third contact face brought into contact with a fourth taper face formed on a front side of the second taper face of the collet and inclined to increase an outer diameter as proceeding to a front end thereof in a state of fastening the fastening nut to the chuck body; and

wherein an angle of the third contact face relative to a diameter direction of the collet chuck is larger than an angle of the first contact face relative to the diameter direction of the collet chuck.

9. The constituent member of a collet chuck according to Claim 1 or 5, further comprising:

that an angle of the second contact face relative to the diameter direction of the collet chuck is larger than the angle of the first contact face relative to the diameter direction of the collet chuck.

10. The collet of a collet chuck according to Claim 2 or 6, further comprising:

that an angle of the second contact face relative to the diameter direction of the collet chuck is larger than the angle of the first contact face relative to the diameter direction of the collet chuck.

11. The fastening nut of the collet chuck according to Claim 3 or 7, further comprising:

that an angle of the second contact face relative to the diameter direction of the collet chuck is larger than the angle of the first contact face relative to the diameter direction of the collet chuck.

12. The collet chuck according to Claim 4 or 8, further comprising:

that an angle of the second contact face relative to the diameter direction of the collet chuck is larger than the angle of the first contact face relative to the diameter direction of the collet chuck.

# Fig.1

# Fig.2

# Fig.3

# Fig.4

80

82   84

86

88

# Fig.5

# Fig.6

# Fig.7

# Fig.8

<u>120</u>

<table>
<tr><td colspan="2"><b>INTERNATIONAL SEARCH REPORT</b></td><td colspan="2">International application No.<br>PCT/JP2007/067853</td></tr>
</table>

| A. CLASSIFICATION OF SUBJECT MATTER |
|---|
| *B23B31/20*(2006.01)i |
| According to International Patent Classification (IPC) or to both national classification and IPC |

| B. FIELDS SEARCHED |
|---|
| Minimum documentation searched (classification system followed by classification symbols)<br>B23B31/20 |
| Documentation searched other than minimum documentation to the extent that such documents are included in the fields searched<br>   Jitsuyo Shinan Koho     1922-1996   Jitsuyo Shinan Toroku Koho   1996-2007<br>   Kokai Jitsuyo Shinan Koho  1971-2007   Toroku Jitsuyo Shinan Koho   1994-2007 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| A | JP 2000-705 A  (Showa Tool Co., Ltd.),<br>07 January, 2000 (07.01.00),<br>Par. No. [0020]; Fig. 5<br>(Family: none) | 1-12 |
| A | Microfilm of the specification and drawings annexed to the request of Japanese Utility Model Application No. 38074/1979(Laid-open No. 137711/1980)<br>(Kuroda Precision Industries Ltd.),<br>01 October, 1980 (01.10.80),<br>Page 4, line 14 to page 8, line 10; all drawings<br>(Family: none) | 1-12 |

| ☒   Further documents are listed in the continuation of Box C. | ☐   See patent family annex. |
|---|---|

| *   Special categories of cited documents: | "T"   later document published after the international filing date or priority date and not in conflict with the application but cited to understand the principle or theory underlying the invention |
|---|---|
| "A"   document defining the general state of the art which is not considered  to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search<br>   04 December, 2007 (04.12.07) | Date of mailing of the international search report<br>   18 December, 2007 (18.12.07) |
|---|---|
| Name and mailing address of the ISA/<br>   Japanese Patent Office | Authorized officer |
| Facsimile No. | Telephone No. |

Form PCT/ISA/210 (second sheet) (April 2007)

**INTERNATIONAL SEARCH REPORT**

| International application No. |
|---|
| PCT/JP2007/067853 |

C (Continuation).  DOCUMENTS CONSIDERED TO BE RELEVANT

| Category* | Citation of document, with indication, where appropriate, of the relevant passages | Relevant to claim No. |
|---|---|---|
| A | JP 10-500908 A  (Kennametal Inc.),<br>27 January, 1998 (27.01.98),<br>Full text; all drawings<br>& US 5522605 A | 1-12 |
| A | JP 10-309612 A  (Yutaka MAEDA),<br>24 November, 1998 (24.11.98),<br>Par. Nos. [0055] to [0065]; Fig. 11<br>& US 6149364 A          & WO 1998/039141 A1 | 1-12 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001219310 A
- JP 10309612 A